# EUROPÄISCHE PATENTSCHRIFT

(11) **EP 3 855 208 B1**
(45) Veröffentlichungstag und Bekanntmachung des Hinweises auf die Patenterteilung: **14.12.2022**
(21) Anmeldenummer: 21152369.1
(22) Anmeldetag: 19.01.2021
(51) Int. Cl.: G01S 7/41, G01S 13/74, G01S 13/87

(54) **SICHERHEITSSYSTEM UND VERFAHREN**
SECURITY SYSTEM AND METHOD
SYSTÈME DE SÉCURITÉ ET PROCÉDÉ

(30) Priorität: 22.01.2020 DE 102020101482
(43) Veröffentlichungstag der Anmeldung: 28.07.2021
(73) Patentinhaber: SICK AG, 79183 Waldkirch (DE)
(72) Erfinder: Hammes, Markus, 79117 Freiburg (DE); Hofmann, Christoph, 79108 Freiburg (DE)

(56) Entgegenhaltungen:
- DE-A1-102016 217 532
- US-A1- 2017 287 332
- US-A1- 2019 118 705

## Beschreibung

Die vorliegende Erfindung betrifft ein Sicherheitssystem zur Lokalisierung einer Person oder eines Objektes gemäß dem Oberbegriff von Anspruch 1 und ein Verfahren zur Lokalisierung einer Person oder eines Objektes gemäß dem Oberbegriff von Anspruch 10.

Die Sensorik der funktionalen Sicherheit ist aktuell auf dem Stand, dass grundlegende physikalische Merkmale der Umgebung, beispielsweise Geometrieinformationen wie z. B. Abstände, Längen oder die Anwesenheit von Objekten an sich zuverlässig erfasst und in einfachen Sicherheitsfunktionen verwendet werden können. Dagegen sind höherwertige Informationen oder abgeleitete Bedeutungen, zum Beispiel die Information, um was für ein Objekt es sich handelt, in aller Regel nicht zuverlässig durch Sensoren ermittelbar und daher auch nicht sicherheitstechnisch nutzbar.

In diesem Sinne ist insbesondere die Information, ob es sich bei einem Objekt, um eine Person handelt oder nicht, für hochwertige Sicherheitsfunktionen interessant. Diese sichere Objektklassifikation konnte bisher noch nicht realisiert werden, ist aber im Hinblick auf die situationsbezogene Steuerung der Maschine sehr wichtig. Im Allgemeinen ist bereits eine Objektklassifikation ein sehr aufwändiges Verfahren, da hierfür in der Regel Bilddaten verwendet werden, die dann sehr aufwändig prozessiert werden müssen. Dies führt in der Regel zu teuren Sensoren mit oftmals erheblichen Latenzzeiten.

Optoelektronische Sicherheitssensoren, beispielsweise Laserscanner oder Lichtgitter erfassen sehr zuverlässig die Anwesenheit eines Objektes oder einer Person. Derartige Sicherheitssensoren finden eine große Verbreitung bei der Gefahrstellenabsicherung von Maschinen und ermöglichen die Implementierung sehr einfacher Sicherheitsfunktionen.

Maschinenbewegungen werden bei Detektion eines sicherheitsrelevanten Objekts in aller Regel gestoppt oder verlangsamt. Dabei bleibt unberücksichtigt, um was für ein Objekt es sich handelt. Diese Information ist im Allgemeinen auch gar nicht verfügbar bzw. nicht sicherheitstechnisch verwendbar.

Eine einfache Detektionsfunktion vorhandener Sicherheitssensoren erlaubt eine zuverlässige Absicherung von Gefahrstellen hat aber in alle Regel nachteilige Auswirkungen auf eine Produktivität einer Maschine. Unabhängig von einer Klasse des detektierten Objekts beispielsweise einer Person, einem Gegenstand oder einer Störung bzw. störenden Gegenständen muss sicherheitsgerichtet abgeschaltet werden, selbst wenn diese Reaktion in bestimmten Fällen nicht erforderlich wäre.

Insbesondere ein sicheres Wissen, dass es sich bei einem detektierten Objekt um eine Person handelt oder nicht, würde eine sehr viel spezifischere Kontrolle einer potenziell gefährlichen Maschine ermöglichen.

Ein autonomes Fahrzeug zum Beispiel wird sehr vorsichtig agieren müssen, wenn es die Anwesenheit einer Person im Fahrweg erfasst, da in diesem Fall keine Information über das zukünftige Verhalten der Person vorliegen. Handelt es sich bei dem Objekt jedoch um ein anderes Fahrzeug, dann besteht keine Gefahr der Gefährdung einer Person und das Fahrzeug muss kein unvorhergesehenes Verhalten einplanen. Betriebsparameter können in diesem Fall im Hinblick auf die Produktivität optimiert werden.

Die DE 10 2016 217 531 A1 offenbart beispielsweise ein Verfahren zur Verbesserung der Verkehrssicherheit, insbesondere von verletzlichen Straßenverkehrsteilnehmern. Dabei wird zumindest eine Funkmessung mittels Ultra-Wideband-Funktechnologie (UWB) zwischen zumindest einer Funkstation eines Fahrzeugs und einer mobilen Funkstelle eines Verkehrsteilnehmers durchgeführt.

Eine Aufgabe der Erfindung besteht darin, eine sichere Unterscheidung von Mensch und Gegenstand zu ermöglichen. Damit sollen hochwertige Sicherheitsfunktionen wie zum Beispiel die gezielte Interaktion zwischen Mensch und Roboter oder zwischen Mensch und mobilen Robotern realisiert werden können.

Die Aufgabe wird gemäß Anspruch 1 gelöst durch ein Sicherheitssystem zur Lokalisierung einer Person oder eines Objektes, mit einer Steuer- und Auswerteeinheit, mit mindestens einem Funkortungssystem, mit mindestens einem ortsauflösenden Sensor zur Positionsbestimmung der Person oder des Objektes, wobei das Funkortungssystem angeordnete Funkstationen aufweist, wobei an der Person oder dem Objekt mindestens ein Funktransponder angeordnet ist, wobei mittels dem Funkortungssystem Positionsdaten der Person oder des Objektes und im Funktransponder enthaltene Klassifizierungsdaten, die eine Identifizierung als Person oder Objekt ermöglichen, ermittelbar sind, wobei die Positionsdaten und die Klassifizierungsdaten von der Funkstation des Funkortungssystems an die Steuer- und Auswerteeinheit übermittelbar sind, und mittels dem ortsauflösenden Sensor Positionsdaten und Konturdaten der Person oder des Objekts ermittelbar sind, wobei die Steuer- und Auswerteeinheit ausgebildet ist, die Positionsdaten des Funkortungssystems und die Positionsdaten des Sensors zu vergleichen und bei einer Übereinstimmung geprüfte Positionsdaten zu bilden, wobei die Steuer- und Auswerteeinheit ausgebildet ist die Klassifizierungsdaten der Funkstation mit den Konturdaten des ortsauflösenden Sensors zu vergleichen und auf Plausibilität zu prüfen, wobei der ortsauflösende Sensor (7) und die Funkstationen (5) stationär angeordnet sind.

Die Aufgabe wird weiter gemäß Anspruch 10 gelöst durch ein Verfahren zur Lokalisierung einer Person oder eines Objektes, mit einer Steuer- und Auswerteeinheit, mit mindestens einem Funkortungssystem, mit mindestens einem ortsauflösenden Sensor zur Positionsbestimmung der Person oder des Objektes, wobei das Funkortungssystem angeordnete Funkstationen aufweist, wobei an der Person oder dem Objekt mindestens ein Funktransponder angeordnet ist, wobei mittels dem Funkortungssystem Positionsdaten der Person oder des Objektes und im Funktransponder enthaltene Klassifizierungsdaten, die eine Identifizierung als Person oder Objekt ermöglichen, ermittelt werden, wobei die Positionsdaten und die Klassifizierungsdaten von der Funkstation des Funkortungssystems an die Steuer- und Auswerteeinheit übermittelt werden, und mittels dem ortsauflösenden Sensor Positionsdaten und Konturdaten der Person oder des Objekts ermittelt werden, wobei die Steuer- und Auswerteeinheit die Positionsdaten des Funkortungssystems und die Positionsdaten des Sensors vergleicht und bei einer Übereinstimmung geprüfte Positionsdaten bildet, wobei die Steuer- und Auswerteeinheit die Klassifizierungsdaten der Funkstation mit den Konturdaten des ortsauflösenden Sensors vergleicht und auf Plausibilität überprüft, wobei der ortsauflösende Sensor (7) und die Funkstationen (5) stationär angeordnet sind.

Das Funkortungssystem ermöglicht auf günstige und einfache Art die Klassifizierung von Personen oder Objekten. Gemäß der Erfindung kann eine Auswertung in höheren semantischen Ebenen erfolgen. So ist es zum Beispiel möglich verschiedene Verhaltensmuster vorherzusagen und zu validieren. Dies kann anhand von einfachen Regelwerken passieren. Oberhalb der Verhaltensebenen ist dann gar eine bewusste Steuerung, nämlich eine Vergabe von Arbeitsaufgaben möglich.

Das Sicherheitssystem wird mindestens durch die Steuer- und Auswerteeinheit, das Funkortungssystem und den ortsauflösenden Sensor gebildet.

Der ortsauflösende Sensor und das Funkortungssystem messen den Winkel bzw. die Richtung zu der Person oder dem Objekt und die Entfernung zu der Person oder dem Objekt. Damit kann der ortsauflösende Sensor auch als Ortungssensor bezeichnet werden.

Die Steuer- und Auswerteeinheit weist Eingänge, eine Verarbeitungseinheit und Ausgänge auf. An die Eingänge ist der ortsauflösende Sensor und die Funkstationen angeschlossen. Die Steuer- und Auswerteeinheit kann eine modulare Steuer- und Auswerteeinheit sein die über eine Software programmierbar ist.

Bei den Ausgängen der Steuer- und Auswerteeinheit kann es sich insbesondere um redundante Sicherheitsausgänge handeln. Dabei handelt es sich beispielsweise um halbleitergesteuerte Schaltausgänge, um beispielsweise einen Antrieb einer Maschine sicher abzuschalten.

Die Erfindung beruht darauf, dass eine Position der Person oder des Objekts durch zwei voneinander unabhängige Merkmale eindeutig identifizierbar ist. Diese Merkmale sind die Position die über den ortsauflösenden Sensor ermittelt wird, sowie die Position, welche über das Funkortungssystem ermittelt wird. Damit wird die Position durch ein redundantes, insbesondere diversitäres System bestimmt.

Die Erfindung nutzt die Kombination von zwei diversitären Sensortechnologien aus, die sich im Hinblick auf die Detektions- und Klassifizierungsaufgabe gegenseitig validieren.

Die erste der beiden Sensortechnologien ist das Funkortungssystem bzw. ein funkbasiertes Lokalisierungssystem mit dem die Positionen von Funktranspondern bis auf wenige Zentimeter genau bestimmt werden kann. Mit Hilfe einer Funktransponder Identifikation und einem darauf hinterlegten Bezug zu einem Objekt oder eine Person liefert das Funkortungssystem zusätzlich zur Position des Objektes oder der Person auch eine Klassifizierungsinformation.

Dieses System muss nicht im Sinne der funktionalen Sicherheit entwickelt und zertifiziert sein, sondern kann im Rahmen von ohnehin genutzten Automatisierungs- oder Logistikfunktionen für eine Sicherheitsanwendung mitgenutzt werden.

Die Funkortung basiert dabei beispielsweise auf einer Triangulation von mindestens einem Funktransponder an der Person oder dem Objekt. Hierzu sind mindestens drei Funkstationen notwendig die den Funktransponder erfassen können. Dabei ist dem Funkortungssystem der Abstand zwischen den jeweiligen Funkstationen bekannt.

Es handelt es sich vorzugsweise um ein Echtzeitortungssystem oder der englischen Entsprechung RTLS (Real-Time-Locating-System). Dabei ist der Funktransponder oder sind die Funktransponder an der Person oder dem Objekt angeordnet. Die Funkstationen erhalten die Funksignale von den Funktranspondern und können so deren Position und damit die Position der Person oder des Objekts bestimmen.

Dabei werden die Positionsdaten von dem Funkortungssystem, nämlich den Funkstationen an die Steuer- und Auswerteeinheit übermittelt.

Bei dem Funkortungssystem kann es sich auch um Funkfrequenzen von Funknetzwerken wie WLAN oder Wi-Fi handeln. Beispielsweise wird ein 2,4 GHz oder ein 5 GHz Band bei einer Bandbreite von 20 MHz oder 40 MHz verwendet.

Bei dem Funkortungssystem kann es sich auch um Funkfrequenzen von Funkverbindungen wie Bluetooth handeln. Dabei werden Funkfrequenzen von 2,402 und 2,480 GHz verwendet. Der Vorteil dieser Frequenzen ist, dass diese weltweit zulassungsfrei betrieben werden dürfen. Je nach verwendeter Leistung können dabei Reichweiten von 0 bis 100 m erreicht werden. Die Reichweiten und die zugehörigen maximalen Leistungen sind in Klassen 1 bis 3 eingeteilt

Das zweite System ist der ortsauflösende Sensor bzw. ein ortsauflösendes Umfelderfassungssystem. Hierbei wird kein Tag zur Lokalisierung benötigt. Damit sind für den ortsauflösenden Sensor keine direkten Klassifizierungsinformationen zugänglich. Dieses Umfelderfassungssystem bzw. der ortsauflösende Sensor liefert also Informationen, dass sich ein Objekt an einer bestimmten Position befindet und ermittelt dessen Position und Abmessung bzw. Kontur.

Die beiden diversitären Teilsysteme, nämlich das Funkortungssystem und der ortsauflösende Sensor ergänzen sich sehr gut im Hinblick auf die funktionalen Aufgaben Positionserfassung und Klassifikation und können daher wechselseitig zur Validierung und damit zur sicherheitstechnischen Verwendung kombiniert werden.

Eine Validierung einer Objekt- oder Personenklassifikation und einer Objekt- oder Personenposition könnte also schematisch wie folgt ablaufen:
Das Funkortungssystem ermittelt die Position eines Objektes oder einer Person, wobei das Objekt über den Funktransponder identifiziert wird. Diese Informationen werden der Steuer- und Auswerteeinheit übermittelt.

Optional übermittelt die Steuer- und Auswerteeinheit ein Suchfeld in dem das Funkortungssystem die Person oder das Objekt identifiziert hat an den ortsauflösenden Sensor.

Der ortsauflösende Sensor prüft, ob in seinem Erfassungsbereich oder seinem Suchfeld eine Person oder ein Objekt passender Größe und ggf. anderer Validierungsparameter wie Form, Geschwindigkeit usw. detektiert. Der ortsauflösende Sensor übermittelt die erfassten Daten an die Steuer- und Auswerteeinheit.

Die Steuer- und Auswerteeinheit vergleicht die erfassten Merkmale bzw. die Kontur der Person oder des Objektes des ortsauflösenden Sensors mit den erfassten Merkmalen bzw. der Kontur der Person oder des Objektes des Funkortungssystems.

Zusätzlich wird die erfasste Position der Person oder des Objektes des Funkortungssystems und die erfasste Position der Person oder des Objektes des ortsauflösenden Sensors miteinander verglichen.

Somit kann sowohl die Personen- bzw. Objektklassifikation, als auch die Personen- bzw. Objektposition wechselseitig durch die beiden diversitären Informationskanäle validiert und so für eine sicherheitstechnische Anwendung geprüft werden.

Gemäß der Erfindung enthält der Funktransponder die Klassifizierungsinformation für die Person oder das Objekt, wodurch die Person oder das Objekt eindeutig identifizierbar ist.

Die Erfindung ermöglicht eine sichere Klassifikation von Personen oder Objekten in einem Überwachungsbereich und erschließt damit die Möglichkeit eine Sicherheitsfunktion spezifisch auf eine jeweilige Situation zuzuschneiden. Damit besteht die Möglichkeit eine Forderung nach einer Risikominderung zu erfüllen, ohne eine Produktivität eines Automatisierungsprozesses zu beeinträchtigen.

Es kann häufig eine bestehende Infrastruktur genutzt werden. Im industriellen Umfeld, aber auch im öffentlichen Bereich, z. B. in Krankenhäusern werden Funkortungssysteme eingesetzt, beispielsweise um fahrerlose Transportfahrzeuge zu orten.

Eine Klassifizierung von Personen oder Objekten erfordert gemäß der Erfindung wenig Rechenaufwand. Die Sensorik ist preiswert und häufig kann sogar bestehende Infrastruktur verwendet werden. Zudem verursacht die Klassifizierung keine nachteilige Latenzzeiten, was ein sehr großer Vorteil für die industrielle Sicherheitstechnik ist. Auch für die Mensch-Roboter-Kollaboration, in der Personen in unmittelbarer Nähe zur Gefahrstelle agieren müssen ist die Erfindung vorteilhaft einsetzbar.

Die physikalischen Wirkprinzipien und deren Stärken und Schwächen der diversitären Sensoren sind vorteilhaft komplementär. Funkortungssysteme weisen beispielsweise aufgrund des Wirkprinzips eine natürliche Immunität gegenüber Fremdlicht auf. Weiter sind Funkortungssysteme wenig empfindlich bei störenden Objekten wie Staub, Spänen oder Nebel. Zudem ist es durch Funkortungssysteme möglich durch nichtmetallische Wände hindurchzusehen, so dass eine besonders frühe Erkennung von Personen oder Objekten möglich ist. Diese erlaubt eine qualitativ hochwertige Optimierung von Prozessen bei steter Gewährleistung der Arbeitssicherheit.

Bei dem Objekt kann es sich um stationäre oder mobile Gegenstände handeln. Beispielsweise handelt es sich bei dem Objekt um Transportmaterial oder Verarbeitungsmaterial.

Gemäß der Erfindung sind der ortsauflösende Sensor und die Funkstationen stationär angeordnet.

Bei der bewegbaren Maschine bzw. mobilen Maschine kann es sich beispielsweise um ein führerloses Fahrzeug, fahrerloses Fahrzeug bzw. autonomes Fahrzeug, um ein automatisch geführtes Fahrzeug (Automated Guided Vehicles, AGV), um ein automatisch mobilen Roboter (Automated Mobile Robots, AMR), um ein industriemobilen Roboter (Industrial Mobile Robots, IMR) oder um einen Roboter mit bewegbaren Roboterarmen handeln. Die bewegbare Maschine weist somit einen Antrieb auf und kann in verschiedenen Richtungen bewegt werden.

Beispielsweise ist der ortsauflösende Sensor an der Frontseite eines Fahrzeuges angeordnet, um Informationen aus der Umgebung zu erfassen. Es können auch mehrere ortsauflösende Sensoren, insbesondere an den Ecken des Fahrzeuges angeordnet sein.

Dadurch kann das Fahrzeug seine eigene Position aufgrund von erkannten Konturen oder erkannten Position der Umgebung erfassen. Beispielsweise erfolgt einer Orientierung ausgehend von einem bekannten Ausgangspunkt oder Startpunkt der bewegbaren Maschine und wird dann fortlaufend anhand von detektierten Umgebungspositionen aktualisiert.

Die Steuer- und Auswerteeinheit ist in diesem Fall ebenfalls an der bewegbaren Maschine angeordnet und mit dem ortsauflösenden Sensor verbunden.

Die Ausgänge der Steuer- und Auswerteeinheit sind mit Funktionseinheiten wie dem Antrieb, den Bremsen und/oder der Lenkung der bewegbaren Maschine verbunden.

Bei der stationären Anordnung kann es sich um eine Anordnung an einer Maschine, einer Förderstrecke, einem Durchgang oder ähnliches handeln.

In Weiterbildung der Erfindung ist das Funkortungssystem ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

Eine absolute Bandbreite beträgt bei einem Ultrabreitband-Funkortungssystem wenigstens 500 MHz oder eine relative Bandbreite beträgt mindestens 20% der zentralen Frequenz.

Die Reichweite eines derartigen Funkortungssystems beträgt beispielsweise 0 bis 50 m. Dabei wird die kurze zeitliche Dauer der Funkpulse für die Ortung benutzt.

Das Funkortungssystem sendet damit nur Funkwellen mit einer niedrigen Energie aus. Das System ist sehr flexibel einsetzbar und weist keine Interferenzen auf.

An der Person oder dem Objekt muss minimal nur ein einziger Funktransponder angeordnet sein, der von mindestens drei stationär angeordneten Funkstationen erfasst wird, wobei der Abstand der Funkstationen bekannt ist.

Vorzugsweise sind eine Vielzahl, beispielsweise mehr als drei Funkstationen angeordnet, welche mindestens einen Teil des Bewegungsbereichs der Person oder des Objektes überwachen.

Es können auch mindestens zwei oder mehr Funktransponder an der Person oder dem Objekt angeordnet sein. Dadurch kann die Position der Person oder des Objektes genauer identifiziert werden und auch die Ausrichtung der Person oder des Objektes im Stillstand erfasst werden, wenn die Anordnung der Funktransponder an der Person oder dem Objekt bekannt ist.

In Weiterbildung der Erfindung ist der ortsauflösende Sensor ein optoelektronischer Sensor, ein Ultraschallsensor oder ein Radarsensor.

Bei einem Lichtlaufzeitsensor wird das von einem Lichtsender ausgesendete Licht welches von der Person oder dem Objekt remittiert wird von einem Lichtempfänger empfangen und die Lichtlaufzeit vom Aussenden bis zum Empfangen von der Person oder dem Objekt wird ausgewertet, wodurch die Entfernung zu der Person oder dem Objekt bestimmt werden kann.

Jedoch kann der Sensor auch ein Ultraschallsensor, oder ein Radar-Sensor sein.

Ein Ultraschallsensor sendet Ultraschall aus und wertet die reflektierten Schallwellen, also die Echosignale aus. Dabei werden Frequenzen ab 16 kHz verwendet. Dabei können Detektionsreichweiten von wenigen Zentimetern bis vielen Metern realisiert werden.

Ein Radarsensor ist ein Sensor, der ein sogenanntes Primärsignal als gebündelte elektromagnetische Welle aussendet, die von Personen oder Objekten reflektierten Echos als Sekundärsignal empfängt und nach verschiedenen Kriterien auswertet. Dabei handelt es sich um eine Ortung, nämlich der Bestimmung von Entfernung und Winkel.

Aus den empfangenen, von der Person oder dem Objekt reflektierten Wellen können Positionsinformationen bzw. die Position gewonnen werden. Wie bereits erwähnt kann der Winkel bzw. die Richtung zum Objekt und die Entfernung zur Person oder dem Objekt aus der Zeitverschiebung zwischen Senden und Empfangen des Signals ermittelt werden. Weiter kann auch die Relativbewegung zwischen Sender und Person bzw. Objekt festgestellt werden, beispielsweise durch eine einfache Mehrfachmessung in zeitlichen Abständen. Das Aneinanderreihen einzelner Messungen liefert die Wegstrecke und die Absolutgeschwindigkeit des Objektes. Bei entsprechender Auflösung des Radarsensors können Konturen der Person bzw. des Objektes erkannt werden.

Eine Abstrahlung von dem Radarsensor erfolgt beispielsweise aufgrund des Antennenentwurfs weitgehend gebündelt in eine Richtung. Die Strahlungscharakteristik der Antenne hat dann eine sogenannte Keulenform.

Die Wellenlänge des Radars liegt im Bereich der Funkwellen im Kurz- bis Mikrowellenbereich. Ein Pulsradarsensor sendet Impulse mit einer typischen Dauer im unteren Mikrosekundenbereich und wartet dann auf Echos. Die Laufzeit des Impulses ist die Zeit zwischen dem Senden und dem Empfang des Echos. Sie wird zur Entfernungsbestimmung genutzt.

Eine Richtung des Abtaststrahles eines Impulsradarsensors kann statt durch die Ausrichtung der Antenne bzw. der Antennen auch elektronisch durch phasengesteuerte Antennenarrays bewirkt werden. Damit können in schnellem Wechsel mehrere Objekte angepeilt und quasi simultan verfolgt werden.

Der Radarsensor arbeitet mit einer Leistung von beispielsweise ca. 10 mW. Diese Leistung ist so gering, dass keine gesundheitlichen Auswirkungen bestehen. Die für diese Anwendung zugelassene Radarfrequenz liegt beispielsweise im Bereich von 76-77 GHz, entsprechend einer Wellenlänge von etwa 4 mm.

In Weiterbildung der Erfindung ist der ortsauflösende Sensor zur mindestens flächigen Überwachung eines Überwachungsbereiches ausgebildet.

Der ortsauflösende Sensor zur mindestens flächigen Überwachung eines Überwachungsbereiches ist ein Sensor zur Entfernungsmessung. Der Entfernungssensor liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren oder Triangulationsverfahren ermittelt.

In Weiterbildung der Erfindung ist der ortsauflösende Sensor zur mindestens räumlichen Überwachung eines Überwachungsbereiches ausgebildet.

In Weiterbildung der Erfindung ist der ortsauflösende oder optoelektronische Sensor ein Laserscanner, ein Sicherheitslaserscanner, eine 3D-Kamera, eine Stereokamera oder eine Lichtlaufzeitkamera.

Zur Positionserfassung überwacht der Laserscanner, der Sicherheitslaserscanner, die 3D-Kamera, die Stereokamera oder die Lichtlaufzeitkamera eine zweidimensionale oder dreidimensionale Messdatenkontur der Person oder des Objektes aus. Dabei kann es sich auch synonym um ein Überwachungsfeld handeln.

Zur Positionserfassung überwacht beispielsweise der Laserscanner, bzw. der Sicherheitslaserscanner eine Messdatenkontur.

In der Sicherheitstechnik eingesetzte Sicherheitssysteme müssen besonders zuverlässig und eigensicher arbeiten und deshalb hohe Sicherheitsanforderungen erfüllen, beispielsweise die Norm EN 13849 für Maschinensicherheit und die Gerätenorm EN61496 für berührungslos wirkende Schutzeinrichtungen (BWS).

Zur Erfüllung dieser Sicherheitsnormen sind eine Reihe von Maßnahmen zu treffen, wie beispielsweise sichere elektronische Auswertung durch redundante und/oder diversitäre Elektronik oder verschiedene Funktionsüberwachungen, speziell die Überwachung der Verschmutzung optischer Bauteile einschließlich einer Frontscheibe. Ein Sicherheitslaserscanner entsprechend derartigen Normen ist beispielsweise aus der DE 43 40 756 A1 bekannt.

Der Begriff 'funktional sicher' ist im Sinne der genannten oder vergleichbaren Normen zu verstehen, es sind also Maßnahmen ergriffen, um Fehler bis zu einem spezifizierten Sicherheitsniveau zu beherrschen. Das Sicherheitssystem kann daher eigensicher ausgebildet sein. Das Sicherheitssystem und/oder mindestens ein nicht sicherer Sensor erzeugen zudem nicht sichere Daten, wie Rohdaten, Punktwolken oder dergleichen. Nicht sicher ist der Gegenbegriff zu sicher, für nicht sichere Geräte, Übertragungswege, Auswertungen und dergleichen und dabei sind demnach die genannten Anforderungen an eine Fehlersicherheit nicht erfüllt.

Eine 3D-Kamera überwacht beispielsweise ebenfalls einen Überwachungsbereich mittels einer Vielzahl von erfassten Distanzwerten. Eine 3D-Kamera hat den Vorteil, dass ein volumenartiger Schutzbereich überwacht werden kann.

Eine Stereokamera überwacht beispielsweise ebenfalls einen Überwachungsbereich mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger bzw. räumlicher Schutzbereich überwacht werden kann.

In Weiterbildung der Erfindung erfolgt aufgrund der geprüften Positionsdaten mittels der Steuer- und Auswerteeinheit eine Veränderung der Sicherheitsfunktion des Sicherheitssystems.

Basierend auf übereinstimmenden Positionsdaten mittels der Steuer- und Auswerteeinheit erfolgt eine Veränderung der Sicherheitsfunktion des Sicherheitssystems.

Wenn beide Teilsysteme, also der ortsauflösende Sensor und das Funkortungssystem eine stimmige und aufeinander zuordenbare Position liefern, dann kann eine vorbestimmte Position, welche beispielsweise abgespeichert ist erkannt sein und die Steuer- und Auswerteeinheit kann auf eine andere Schutzmaßnahme bzw. Sicherheitsfunktion umschalten. Das Umschalten der Schutzmaßnahme kann beispielsweise ein Umschalten von Messdatenkonturen, ein Umschalten von Schutzfeldern, eine Größen- oder Formanpassung von Messdatenkonturen oder Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

In Weiterbildung der Erfindung werden mittels der Steuer- und Auswerteeinheit geprüften Positionsdaten mit gespeicherten Positionsdaten eines Sicherheitspunktes auf Übereinstimmung geprüft und bei einer Übereinstimmung erfolgt eine Veränderung der Sicherheitsfunktion des Sicherheitssystems.

Der Sicherheitspunkt (Safe Point of Interest, SPol) ist eine vereinfachte Variante einer sicheren Positionierung, die sich auf eine Detektion besonderer Positionen in einer industriellen Anwendung beschränkt, an denen es erforderlich ist das Sicherheitssystem bzw. eine Schutzeinrichtung oder eine Sicherheitsfunktion der bewegbaren Maschine anzupassen, um sowohl einen Personenschutz wie auch eine Maschinenverfügbarkeit zu gewährleisten. Bei dem Sicherheitspunkt handelt es sich als synonyme Bezeichnung um einen Sicherheitsort, also keinen singularen Punkt.

In Weiterbildung der Erfindung weist das Sicherheitssystem eine Karte oder ein Kartenmodel auf, wobei der mindestens eine Sicherheitspunkt in der Karte oder dem Kartenmodel eingetragen ist und eine Navigation der bewegbaren Maschine in der Karte oder dem Kartenmodel erfolgt.

Die aktuelle Position und/oder Lage der bewegbaren Maschine wird in der Steuer- und Auswerteeinheit aufgrund erfasster Umgebungskonturen kontinuierlich verarbeitet und die Karte oder das Kartenmodell aktualisiert. Die Karte weist ein Koordinatensystem auf. Diese Art der Positionsbestimmung wird als Simultaneous-Localisation-and-Mapping (kurz: SLAM) Methode bezeichnet. Dabei ist mindestens eine Position und eine zugehörige Orientierung in der Karte bekannt, bzw. eine Ursprungsposition und Ursprungsorientierung in der Karte bekannt. Erkannte Positionen und/oder Konturen werden in die Karte fortlaufend eingetragen, wodurch die Karte erweitert wird bzw. Veränderungen von beispielsweise Objekten und/oder Fahrwegen in die Karte eingetragen werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sicherheitssystem zur Lokalisierung einer Person;
- Figur 2: ein Sicherheitssystem zur Lokalisierung eines Objekts;
- Figur 3: ein mobiles Sicherheitssystem zur Lokalisierung einer Person oder eines Objekts;
- Figur 4: ein stationäres Sicherheitssystem zur Lokalisierung einer Person oder eines Objektes;
- Figur 5: ein stationäres Sicherheitssystem zur Lokalisierung einer Person oder eines Objekts.

In den nachfolgenden Figuren sind identische Teile mit identischen Bezugszeichen versehen.

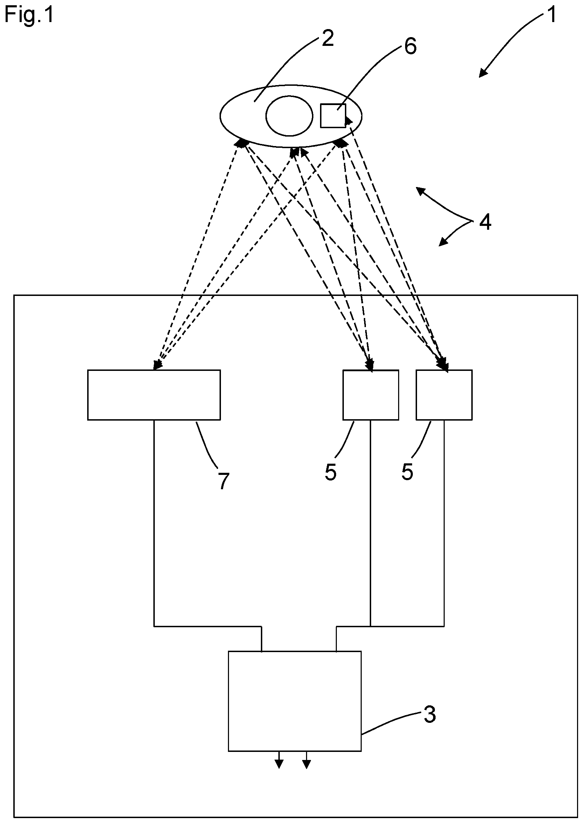

Figur 1 zeigt ein Sicherheitssystem 1 zur Lokalisierung einer Person 2, mit einer Steuer- und Auswerteeinheit 3, mit mindestens einem Funkortungssystem 4, mit mindestens einem ortsauflösenden Sensor 7 zur Positionsbestimmung der Person 2, wobei das Funkortungssystem 4 angeordnete Funkstationen 5 aufweist, wobei an der Person 2 mindestens ein Funktransponder 6 angeordnet ist, wobei mittels dem Funkortungssystem 4 Positionsdaten und Klassifizierungsdaten der Person 2 ermittelbar sind, wobei die Positionsdaten und die Klassifizierungsdaten von der Funkstation 5 des Funkortungssystems 4 an die Steuer- und Auswerteeinheit 3 übermittelbar sind, und mittels dem ortsauflösenden Sensor 7 Positionsdaten und Konturdaten der Person 2 ermittelbar sind, wobei die Steuer- und Auswerteeinheit 3 ausgebildet ist, die Positionsdaten des Funkortungssystems 4 und die Positionsdaten des ortsauflösenden Sensors 7 zu vergleichen und bei einer Übereinstimmung geprüfte Positionsdaten zu bilden, wobei mittels der Steuer- und Auswerteeinheit 3 die Klassifizierungsdaten der Funkstation 5 durch Vergleich mit den Konturdaten des ortsauflösenden Sensors 7auf Plausibilität geprüft werden.

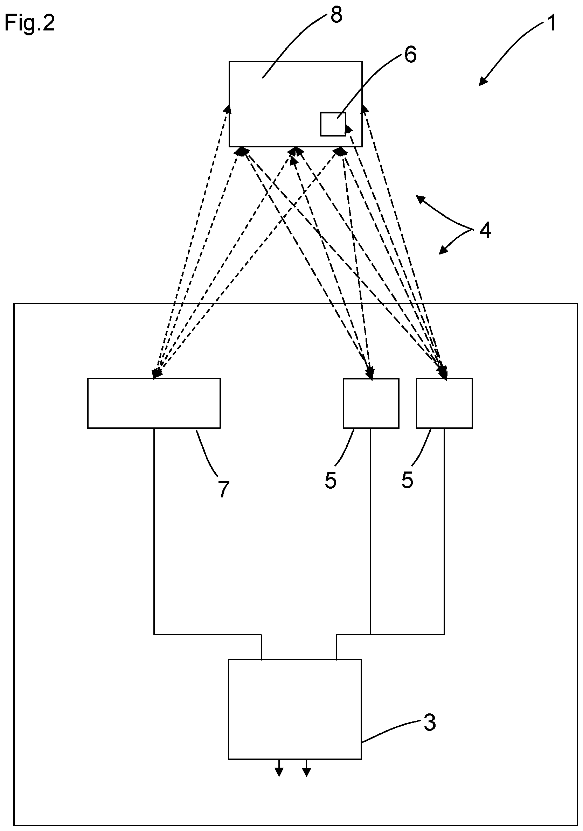

Figur 2 zeigt analog zu Figur 1 ein Sicherheitssystem zur Lokalisierung eines Objektes 8, mit einer Steuer- und Auswerteeinheit 3, mit mindestens einem Funkortungssystem 4, mit mindestens einem ortsauflösenden Sensor 7 zur Positionsbestimmung des Objektes 8, wobei das Funkortungssystem 4 angeordnete Funkstationen 5 aufweist. An dem Objekt ist eine Funktransponder 6 angeordnet.

Das Sicherheitssystem 1 wird mindestens durch die Steuer- und Auswerteeinheit 3, das Funkortungssystem 4 und den ortsauflösenden Sensor 7 gebildet.

Der ortsauflösende Sensor 7 und das Funkortungssystem 4 messen den Winkel bzw. die Richtung zu der Person 2 oder dem Objekt 8 und die Entfernung zu der Person 2 oder dem Objekt 8.

Die Steuer- und Auswerteeinheit 3 weist Eingänge, eine Verarbeitungseinheit und Ausgänge auf. An die Eingänge ist der ortsauflösende Sensor 7 und die Funkstationen 5 angeschlossen.

Bei den Ausgängen der Steuer- und Auswerteeinheit 3 kann es sich insbesondere um redundante Sicherheitsausgänge handeln. Dabei handelt es sich beispielsweise um halbleitergesteuerte Schaltausgänge, um beispielsweise einen Antrieb einer Maschine sicher abzuschalten.

Die Erfindung nutzt die Kombination von zwei diversitären Sensortechnologien aus, die sich im Hinblick auf die Detektions- und Klassifizierungsaufgabe gegenseitig validieren.

Die erste der beiden Sensortechnologien ist das Funkortungssystem 4 bzw. ein funkbasiertes Lokalisierungssystem mit dem die Positionen von Funktranspondern 6 bis auf wenige Zentimeter genau bestimmt werden kann. Mit Hilfe einer Funktransponder Identifikation und einem darauf hinterlegten Bezug zu einem Objekt 8 oder eine Person 2 liefert das Funkortungssystem 4 zusätzlich zur Position des Objektes 8 oder der Person 2 auch eine Klassifizierungsinformation.

Die Funkortung basiert dabei beispielsweise auf einer Triangulation von mindestens einem Funktransponder 6 an der Person 2 oder dem Objekt 8. Hierzu sind mindestens drei Funkstationen 5 notwendig die den Funktransponder 6 erfassen können. Dabei ist dem Funkortungssystem 4 der Abstand zwischen den jeweiligen Funkstationen 5 bekannt.

Es handelt es sich vorzugsweise um ein Echtzeitortungssystem oder der englischen Entsprechung RTLS (Real-Time-Locating-System). Dabei ist der Funktransponder 6 oder sind die Funktransponder 6 an der Person 2 oder dem Objekt 8 angeordnet. Die Funkstationen 5 erhalten die Funksignale von den Funktranspondern 6 und können so deren Position und damit die Position der Person 2 oder des Objekts 8 bestimmen.

Dabei werden die Positionsdaten von dem Funkortungssystem 4, nämlich den Funkstationen 5 an die Steuer- und Auswerteeinheit 3 übermittelt.

Das zweite System ist der ortsauflösende Sensor 7 bzw. ein ortsauflösendes Umfelderfassungssystem. Hierbei wird kein Funktransponder bzw. Tag zur Lokalisierung benötigt. Dieses Umfelderfassungssystem bzw. der ortsauflösende Sensor 7 liefert also Informationen, dass sich ein Objekt 8 an einer bestimmten Position befindet und ermittelt dessen Position und Abmessung bzw. Kontur.

Die beiden diversitären Teilsysteme, nämlich das Funkortungssystem 4 und der ortsauflösende Sensor 7 ergänzen sich sehr gut im Hinblick auf die funktionalen Aufgaben Positionserfassung und Klassifikation und können daher wechselseitig zur Validierung und damit zur sicherheitstechnischen Verwendung kombiniert werden.

Eine Validierung einer Objekt- oder Personenklassifikation und einer Objekt- oder Personenposition könnte also schematisch gemäß Figur 1 oder Figur 2 wie folgt ablaufen:
Das Funkortungssystem 4 ermittelt die Position eines Objektes 8 oder einer Person 2, wobei das Objekt 8 oder die Person 2 über den Funktransponder 6 identifiziert wird. Diese Informationen werden der Steuer- und Auswerteeinheit 3 übermittelt.

Optional übermittelt die Steuer- und Auswerteeinheit 3 ein Suchfeld in dem das Funkortungssystem 4 die Person 2 oder das Objekt 8 identifiziert hat an den ortsauflösenden Sensor 7.

Der ortsauflösende Sensor 7 prüft, ob in seinem Erfassungsbereich oder seinem Suchfeld eine Person 2 oder ein Objekt 8 passender Größe und ggf. anderer Validierungsparameter wie Form, Geschwindigkeit usw. detektiert. Der ortsauflösende Sensor 7 übermittelt die erfassten Daten an die Steuer- und Auswerteeinheit 3.

Die Steuer- und Auswerteeinheit 3 vergleicht die erfassten Merkmale bzw. die Kontur der Person 2 oder des Objektes 8 des ortsauflösenden Sensors 7 mit den erfassten Merkmalen bzw. der Kontur der Person 2 oder des Objektes 8 des Funkortungssystems 4.

Zusätzlich wird die erfasste Position der Person 2 oder des Objektes 8 des Funkortungssystems 4 und die erfasste Position der Person 2 oder des Objektes 8 des ortsauflösenden Sensors 7 miteinander verglichen.

Somit kann sowohl die Personen- bzw. Objektklassifikation, als auch die Personen- bzw. Objektposition wechselseitig durch die beiden diversitären Informationskanäle validiert und so für eine sicherheitstechnische Anwendung geprüft werden.

Gemäß Figur 1 oder Figur 2 enthält der Funktransponder 6 die Klassifizierungsinformation für die Person 2 oder das Objekt 8, wodurch die Person 2 oder das Objekt 8 eindeutig identifizierbar ist.

Gemäß Figur 2 sind der ortsauflösende Sensor 7 und die Funkstationen 5 beispielsweise stationär an einem Förderband angeordnet.

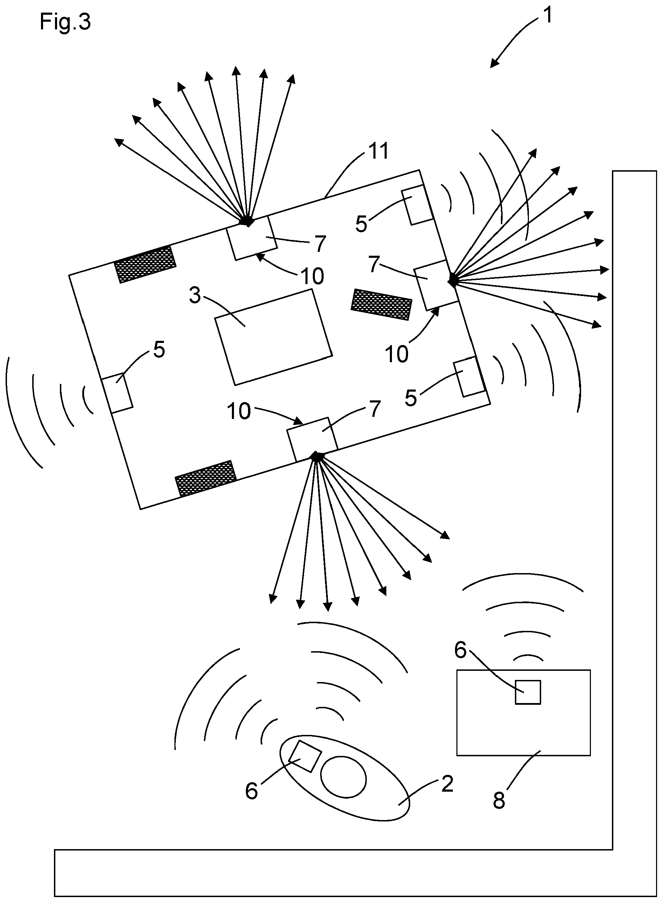

Figur 3 zeigt ein mobiles Sicherheitssystem 1 zur Lokalisierung einer Person 2 oder eines Objekts 8. Gemäß Figur 3 sind der ortsauflösende Sensor 7 und die Funkstationen 5 mobil an einer bewegbaren Maschine 11 angeordnet.

Bei der bewegbaren Maschine 11 bzw. mobilen Maschine kann es sich beispielsweise um ein führerloses Fahrzeug, fahrerloses Fahrzeug bzw. autonomes Fahrzeug, um ein automatisch geführtes Fahrzeug (Automated Guided Vehicles, AGV), um ein automatisch mobilen Roboter (Automated Mobile Robots, AMR), um ein industriemobilen Roboter (Industrial Mobile Robots, IMR) oder um einen Roboter mit bewegbaren Roboterarmen handeln. Die bewegbare Maschine 11 weist somit einen Antrieb auf und kann in verschiedenen Richtungen bewegt werden.

Beispielsweise ist der ortsauflösende Sensor 7 an der Frontseite eines Fahrzeuges angeordnet, um Informationen aus der Umgebung zu erfassen. Es können auch mehrere ortsauflösende Sensoren 7, insbesondere an den Ecken des Fahrzeuges angeordnet sein.

Dadurch kann das Fahrzeug seine eigene Position aufgrund von erkannten Konturen oder erkannten Position der Umgebung erfassen. Beispielsweise erfolgt einer Orientierung ausgehend von einem bekannten Ausgangspunkt oder Startpunkt der bewegbaren Maschine 11 und wird dann fortlaufend anhand von detektierten Umgebungspositionen aktualisiert.

Die Steuer- und Auswerteeinheit 3 ist in diesem Fall ebenfalls an der bewegbaren Maschine 11 angeordnet und mit dem ortsauflösenden Sensor 7 verbunden.

Die Ausgänge der Steuer- und Auswerteeinheit 3 sind mit Funktionseinheiten wie dem Antrieb, den Bremsen und/oder der Lenkung der bewegbaren Maschine 11 verbunden.

Gemäß Figur 3 ist das Funkortungssystem 4 ein Ultrabreitband-Funkortungssystem, wobei die verwendete Frequenz im Bereich von 3,1 GHz bis 10,6 GHz ist, wobei die Sendeenergie pro Funkstation maximal 0,5 mW beträgt.

An der Person 2 oder dem Objekt 8 muss minimal nur ein einziger Funktransponder 6 angeordnet sein, der von mindestens drei angeordneten Funkstationen 5 erfasst wird, wobei der Abstand der Funkstationen 5 bekannt ist.

Vorzugsweise sind eine Vielzahl, beispielsweise mehr als drei Funkstationen 5 angeordnet, welche mindestens einen Teil des Bewegungsbereichs der Person 2 oder des Objektes 8 überwachen.

Es können auch mindestens zwei oder mehr Funktransponder 6 an der Person 2 oder dem Objekt 8 angeordnet sein. Dadurch kann die Position der Person 2 oder des Objektes 8 genauer identifiziert werden und auch die Ausrichtung der Person 2 oder des Objektes 8 im Stillstand erfasst werden, wenn die Anordnung der Funktransponder 6 an der Person 2 oder dem Objekt 8 bekannt ist.

Gemäß Figur 3 ist der ortsauflösende Sensor 7 ein optoelektronischer Sensor, insbesondere ein Laserscanner 10. Somit ist der ortsauflösende Sensor 7 zur mindestens flächigen Überwachung eines Überwachungsbereiches ausgebildet.

Der Laserscanner 10 liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren ermittelt. Zur Positionserfassung überwacht beispielsweise der Laserscanner 10, bzw. der Sicherheitslaserscanner eine Messdatenkontur.

Optional erfolgt aufgrund der geprüften Positionsdaten mittels der Steuer- und Auswerteeinheit 3 eine Veränderung der Sicherheitsfunktion des Sicherheitssystems 1.

Basierend auf übereinstimmenden Positionsdaten mittels der Steuer- und Auswerteeinheit 3 erfolgt eine Veränderung der Sicherheitsfunktion des Sicherheitssystems 1.

Wenn beide Teilsysteme, also der ortsauflösende Sensor 7 und das Funkortungssystem 4 eine stimmige und aufeinander zuordenbare Position liefern, dann kann eine vorbestimmte Position, welche beispielsweise abgespeichert ist erkannt sein und die Steuer- und Auswerteeinheit 3 kann auf eine andere Schutzmaßnahme bzw. Sicherheitsfunktion umschalten. Das Umschalten der Schutzmaßnahme kann beispielsweise ein Umschalten von Messdatenkonturen, ein Umschalten von Schutzfeldern, eine Größen- oder Formanpassung von Messdatenkonturen oder Schutzfeldern und/oder eine Umschaltung der Eigenschaften eines Schutzfeldes umfassen. Zu den Eigenschaften eines Schutzfeldes gehören beispielsweise die Auflösung und/oder die Reaktionszeit des Schutzfeldes. Ein Umschalten der Schutzmaßnahme kann auch eine Sicherheitsfunktion, wie beispielsweise eine Kraftbegrenzung des Antriebs sein, auf die umgeschaltet wird.

Optional werden mittels der Steuer- und Auswerteeinheit 3 geprüften Positionsdaten mit gespeicherten Positionsdaten eines Sicherheitspunktes auf Übereinstimmung geprüft und bei einer Übereinstimmung erfolgt eine Veränderung der Sicherheitsfunktion des Sicherheitssystems 1.

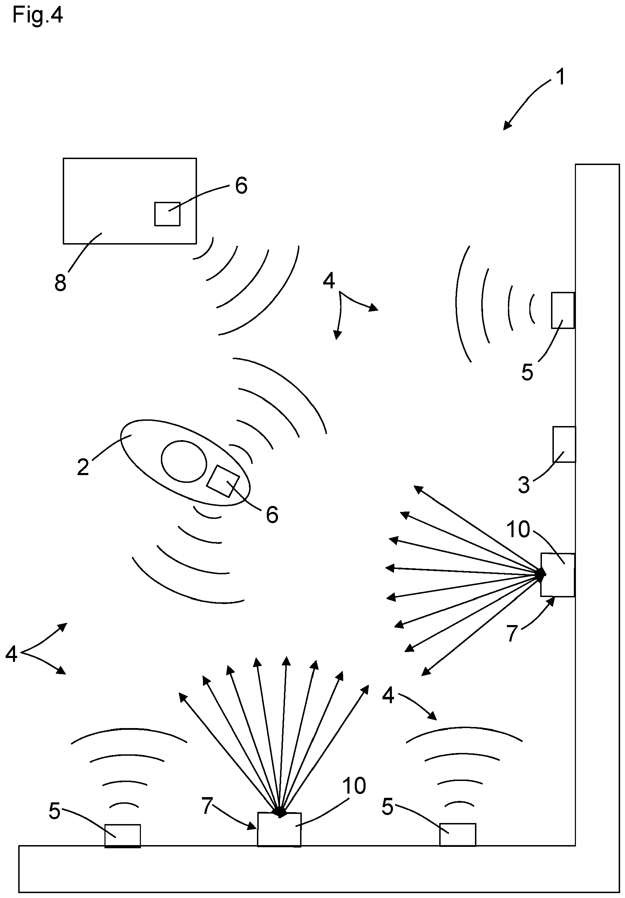

Gemäß Figur 4 sind die Funkstationen 5 und der ortsauflösende Sensor 7 stationär angeordnet. Ein Funktransponder 6 ist an der Person 2 angeordnet. Ein weiterer Funktransponder 6 ist an einem Objekt 8 angeordnet.

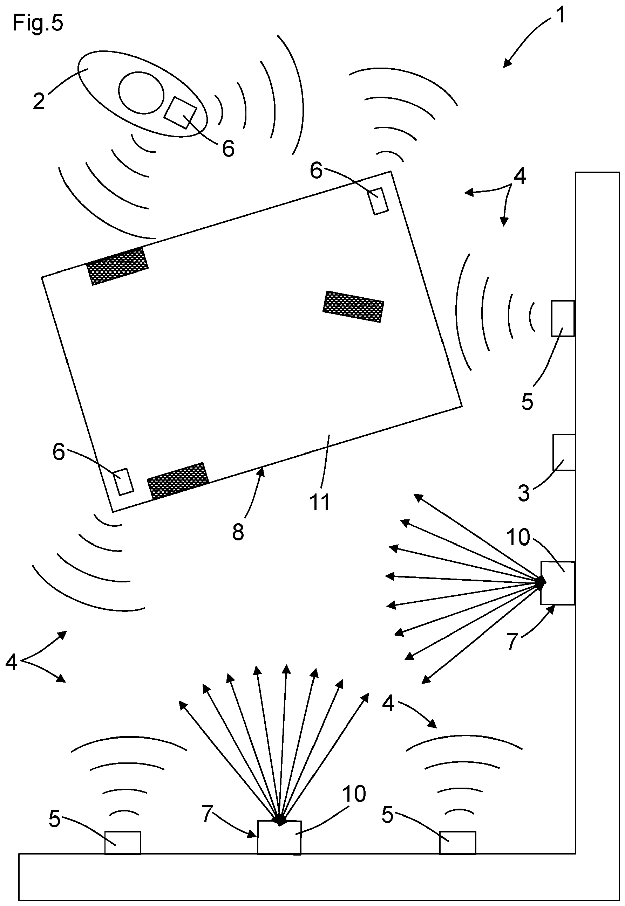

Figur 5 zeigt ein stationäres Sicherheitssystem 1 zur Lokalisierung einer Person 2 oder eines Objekts 8. Gemäß Figur 5 sind die Funkstationen 5 und der ortsauflösende Sensor 7 stationär angeordnet. Zwei Funktransponder 6 sind an einem mobilen Fahrzeug angeordnet.

Bezugszeichen:
1 Sicherheitssystem
2 Person
3 Steuer- und Auswerteeinheit
4 Funkortungssystem
5 Funkstationen
6 Funktransponder
7 ortsauflösender Sensor
8 Objekt
10 Laserscanner
11 bewegbare Maschine

## Patentansprüche

1. Sicherheitssystem (1) zur Lokalisierung einer Person (2) oder eines Objektes (8), mit einer Steuer- und Auswerteeinheit (3), mit mindestens einem Funkortungssystem (4), mit mindestens einem ortsauflösenden Sensor (7) zur Positionsbestimmung der Person (2) oder des Objektes (8), wobei das Funkortungssystem (4) angeordnete Funkstationen (5) aufweist,
wobei an der Person (2) oder dem Objekt (8) mindestens ein Funktransponder (6) angeordnet ist,
wobei mittels dem Funkortungssystem (4) Positionsdaten der Person (2) oder des Objektes (8) und im Funktransponder enthaltene Klassifizierungsdaten, die eine Identifizierung als Person oder Objekt ermöglichen, ermittelbar sind, wobei die Positionsdaten und die Klassifizierungsdaten von der Funkstation (5) des Funkortungssystems (4) an die Steuer- und Auswerteeinheit (3) übermittelbar sind,
und mittels dem ortsauflösenden Sensor (7) Positionsdaten und Konturdaten der Person (2) oder des Objekts (8) ermittelbar sind,
**dadurch gekennzeichnet, dass** die Steuer- und Auswerteeinheit (3) ausgebildet ist, die Positionsdaten des Funkortungssystems (4) und die Positionsdaten des Sensors (7) zu vergleichen und bei einer Übereinstimmung geprüfte Positionsdaten zu bilden, wobei die Steuer- und Auswerteeinheit (3) ausgebildet ist die Klassifizierungsdaten der Funkstation (5) mit den Konturdaten des ortsauflösenden Sensors (7) zu vergleichen und auf Plausibilität zu prüfen, wobei der ortsauflösende Sensor (7) und die Funkstationen (5) stationär angeordnet sind.

2. Sicherheitssystem (1) nach Anspruch 1, **dadurch gekennzeichnet, dass** das Funkortungssystem (4) ein Ultrabreitband-Funkortungssystem ist, wobei die verwendete Frequenz im Bereich von 3,1 GHz bis 10,6 GHz ist, wobei die Sendeenergie pro Funkstation (5) maximal 0,5 mW beträgt.

3. Sicherheitssystem (1) nach mindestens einem der vorhergehenden Ansprüche, **dadurch gekennzeichnet, dass** der ortsauflösende Sensor (7) ein optoelektronischer Sensor, ein Ultraschallsensor oder ein Radarsensor ist.

4. Sicherheitssystem (1) nach mindestens einem der vorhergehenden Ansprüche, **dadurch gekennzeichnet, dass** der ortsauflösende Sensor (7) zur mindestens flächigen Überwachung eines Überwachungsbereiches ausgebildet ist.

5. Sicherheitssystem (1) nach mindestens einem der vorhergehenden Ansprüche, **dadurch gekennzeichnet, dass** der ortsauflösende Sensor (7) zur mindestens räumlichen Überwachung eines Überwachungsbereiches ausgebildet ist

6. Sicherheitssystem (1) nach mindestens einem der vorhergehenden Ansprüche, **dadurch gekennzeichnet, dass** der optoelektronische Sensor ein Laserscanner (10), ein Sicherheitslaserscanner, eine 3D-Kamera, eine Stereokamera oder eine Lichtlaufzeitkamera ist.

7. Sicherheitssystem (1) nach mindestens einem der vorhergehenden Ansprüche, **dadurch gekennzeichnet, dass** aufgrund der geprüften Positionsdaten mittels der Steuer- und Auswerteeinheit (3) eine Veränderung der Sicherheitsfunktion des Sicherheitssystems (1) erfolgt.

8. Sicherheitssystem (1) nach mindestens einem der vorhergehenden Ansprüche, **dadurch gekennzeichnet, dass** mittels der Steuer- und Auswerteeinheit (3) geprüften Positionsdaten mit gespeicherten Positionsdaten eines Sicherheitspunktes auf Übereinstimmung geprüft werden und bei einer Übereinstimmung eine Veränderung der Sicherheitsfunktion des Sicherheitssystems (1) erfolgt.

9. Sicherheitssystem (1) nach mindestens einem der vorhergehenden Ansprüche, **dadurch gekennzeichnet, dass** das Sicherheitssystem (1) eine Karte oder ein Kartenmodel aufweist, wobei der mindestens ein Sicherheitspunkt in der Karte oder dem Kartenmodel eingetragen ist und eine Navigation der bewegbaren Maschine in der Karte oder dem Kartenmodel erfolgt.

10. Verfahren zur Lokalisierung einer Person (2) oder eines Objektes (8), mit einer Steuer- und Auswerteeinheit (3), mit mindestens einem Funkortungssystem (4), mit mindestens einem ortsauflösenden Sensor (7) zur Positionsbestimmung der Person (2) oder des Objektes (8), wobei
das Funkortungssystem (4) angeordnete Funkstationen (5) aufweist,
wobei an der Person (2) oder dem Objekt (8) mindestens ein Funktransponder (6) angeordnet ist,
wobei mittels dem Funkortungssystem (4) Positionsdaten der Person (2) oder des Objektes (8) und im Funktransponder enthaltene Klassifizierungsdaten, die eine Identifizierung als Person oder Objekt ermöglichen, ermittelt werden, wobei die Positionsdaten und die Klassifizierungsdaten von der Funkstation (5) des Funkortungssystems (4) an die Steuer- und Auswerteeinheit (3) übermittelt werden,
und mittels dem ortsauflösenden Sensor (7) Positionsdaten und Konturdaten der Person (2) oder des Objekts (8) ermittelt werden.
**dadurch gekennzeichnet, dass** die Steuer- und Auswerteeinheit (3) die Positionsdaten des Funkortungssystems (4) und die Positionsdaten des Sensors (7) vergleicht und bei einer Übereinstimmung geprüfte Positionsdaten bildet, wobei die Steuer- und Auswerteeinheit (3) die Klassifizierungsdaten der Funkstation (5) mit den Konturdaten des ortsauflösenden Sensors (7) vergleicht und auf Plausibilität überprüft, wobei der ortsauflösende Sensor (7) und die Funkstationen (5) stationär angeordnet sind.

## Claims

1. A safety system (1) for localizing one of a person (2) and an object (8), the safety system comprising:
a control and evaluation unit (3),
at least one radio location system (4), and
at least one spatially resolving sensor (7) for the position determination of the person (2) or of the object (8),
wherein the radio location system (4) has arranged radio stations (5),
wherein at least one radio transponder (6) is arranged at the person (2) or the object (8),
wherein position data of the person (2) or object (8) and in the transponder contained classification data that enable identification as a person or object, can be determined by means of the radio location system (4),
wherein the position data and the classification data can be transmitted from the radio station (5) of the radio location system (4) to the control and evaluation unit (3),
wherein position data and contour data of the person (2) or of the object (8) can be determined by means of the spatially resolving sensor (7), **characterized in that** the control and evaluation unit (3) is configured to compare the position data of the radio location system (4) with the position data of the sensor (7) and to form checked position data on an agreement, with the control and evaluation unit (3) being configured to compare the classification data of the radio station (5) with the contour data of the spatially resolving sensor (7) and to check for plausibility wherein the spatially resolving sensor (7) and the radio stations (5) are arranged as stationary.

2. The safety system (1) in accordance with claim 1, wherein the radio location system (4) is an ultrawide band radio location system, with the frequency used being in the range from 3.1 GHz to 10.6 GHz, with the transmission energy per radiation station (5) amounting to a maximum of 0.5 mW.

3. The safety system (1) according to at least one of the preceding claims, wherein the spatially resolving sensor (7) is one of an optoelectronic sensor, an ultrasonic sensor, and a radio sensor.

4. The safety system (1) according to at least one of the preceding claims, wherein the spatially resolving sensor (7) is configured for an at least areal monitoring of a monitored zone.

5. The safety system (1) according to at least one of the preceding claims, wherein the spatially resolving sensor (7) is configured for an at least spatial monitoring of a monitored zone.

6. The safety system (1) according to at least one of the preceding claims, wherein the optoelectronic sensor is one of a laser scanner (10), a safety laser scanner, a 3D camera, a stereo camera, and a time of flight camera.

7. The safety system (1) according to at least one of the preceding claims, wherein a change of the safety function of the safety system (1) takes place by means of the control and evaluation unit (3) based on the checked position data.

8. The safety system (1) according to at least one of the preceding claims, wherein position data checked by means of the control and evaluation unit (3) controller are checked for agreement with stored position data of a safe point of interest and if there is agreement, a change of the safety function of the safety system (1) takes place.

9. The safety system (1) according to at least one of the preceding claims, wherein the safety system (1) has one of a map and a map model, with the at least one safe point of interest being entered in the map or map model and a navigation of the movable machine taking place in the map or map model.

10. A method of localizing one of a person (2) and an object (8), wherein a control and evaluation unit (3), at least one radio location system (4), and at least one spatially resolving sensor (7) for the position determination of the person (2) or the object (8) are provided, wherein
the radio location system (4) has arranged radio stations (5),
wherein at least one radio transponder (6) is arranged at the person (2) or the object (8),
wherein position data of the person (2) or object (8) and in the transponder contained classification data that enable identification as a person or object can be determined by means of the radio location system (4),
wherein the position data and the classification data are transmitted from the radio station (5) of the radio location system (4) to the control and evaluation unit (3),
position data and contour data of the person (2) or the object (8) are determined by means of the spatially resolving sensor (7), **characterized in that** the control and evaluation unit (3) compares the position data of the radio location system (4) with the position data of the sensor (7) and forms checked position data on an agreement, with the control and evaluation unit (3) comparing the classification data of the radio station (5) with the contour data of the spatially resolving sensor (7) and checking for plausibility wherein the spatially resolving sensor (7) and the radio stations (5) are arranged as stationary.

## Revendications

1. Système de sécurité (1) pour localiser une personne (2) ou un objet (8), le système de sécurité comprenant:
une unité de commande et d'évaluation (3),
au moins un système de radiolocalisation (4), et
au moins un capteur à résolution spatiale (7) pour la détermination de la position de la personne (2) ou de l'objet (8),
dans lequel le système de radiolocalisation (4) comporte des stations radio (5) disposées,
dans lequel au moins un transpondeur radio (6) est disposé sur la personne (2) ou l'objet (8),
dans lequel les données de position de la personne (2) ou de l'objet (8) et les données de classification contenues dans le transpondeur qui permettent l'identification en tant que personne ou objet, peuvent être déterminées au moyen du système de radiolocalisation (4),
dans lequel les données de position et les données de classification peuvent être transmises de la station radio (5) du système de localisation radio (4) à l'unité de commande et d'évaluation (3),
dans lequel des données de position et des données de contour de la personne (2) ou de l'objet (8) peuvent être déterminées au moyen du capteur à résolution spatiale (7),
**caractérisé en ce que** l'unité de commande et d'évaluation (3) est configurée pour comparer les données de position du système de radiolocalisation (4) avec les données de position du capteur (7) et pour former des données de position vérifiées sur une concordance, l'unité de commande et d'évaluation (3) étant configurée pour comparer les données de classification de la station radio (5) avec les données de contour du capteur à résolution spatiale (7) et pour vérifier la plausibilité, le capteur à résolution spatiale (7) et les stations radio (5) étant disposés de manière stationnaire.

2. Système de sécurité (1) selon la revendication 1, dans lequel le système de radiolocalisation (4) est un système de radiolocalisation à bande ultra-large, la fréquence utilisée étant dans la zone de 3,1 GHz à 10,6 GHz, l'énergie d'émission par station radio (5) s'élevant à un maximum de 0,5 mW.

3. Système de sécurité (1) selon au moins une des revendications précédentes, dans lequel le capteur à résolution spatiale (7) est un capteur optoélectronique, un capteur à ultrasons ou un capteur radio.

4. Système de sécurité (1) selon au moins l'une des revendications précédentes, dans lequel le capteur à résolution spatiale (7) est configuré pour une surveillance au moins surfacique d'une zone surveillée.

5. Système de sécurité (1) selon au moins l'une des revendications précédentes, dans lequel le capteur à résolution spatiale (7) est configuré pour une surveillance au moins spatiale d'une zone surveillée.

6. Système de sécurité (1) selon au moins l'une des revendications précédentes, dans lequel le capteur optoélectronique est un scanner laser (10), un scanner laser de sécurité, une caméra 3D, une caméra stereo ou une caméra à temps de vol.

7. Système de sécurité (1) selon au moins l'une des revendications précédentes, dans lequel une modification de la fonction de sécurité du système de sécurité (1) a lieu au moyen de l'unité de commande et d'évaluation (3) sur la base des données de position vérifiées.

8. Système de sécurité (1) selon au moins l'une des revendications précédentes, dans lequel les données de position vérifiées au moyen de l'unité de commande et d'évaluation (3) sont contrôlées quant à leur concordance avec les données de position mémorisées d'un point d'intérêt sûr et, en cas de concordance, une modification de la fonction de sécurité du système de sécurité (1) a lieu.

9. Système de sécurité (1) selon au moins l'une des revendications précédentes, dans lequel le système de sécurité (1) présente une carte ou un modèle de carte, l'au moins un point d'intérêt sûr étant saisi dans la carte ou le modèle de carte et une navigation de la machine mobile ayant lieu dans la carte ou le modèle de carte.

10. Procédé de localisation d'une personne (2) ou d'un objet (8), avec une unité de commande et d'évaluation (3), au moins un système de radiolocalisation (4) et au moins un capteur à résolution spatiale (7) pour déterminer la position de la personne (2) ou de l'objet (8),
dans lequel le système de radiolocalisation (4) comporte des stations radio (5) disposées,
dans lequel au moins un transpondeur radio (6) est disposé sur la personne (2) ou l'objet (8),
dans lequel les données de position de la personne (2) ou de l'objet (8) et les données de classification contenues dans le transpondeur qui permettent l'identification en tant que personne ou objet, peuvent être déterminées au moyen du système de radiolocalisation (4),
dans lequel les données de position et les données de classification sont transmises de la station radio (5) du système de radiolocalisation (4) à l'unité de commande et d'évaluation (3),
des données de position et des données de contour de la personne (2) ou de l'objet (8) sont déterminées au moyen du capteur à résolution spatiale (7),
**caractérisé en ce que** l'unité de commande et d'évaluation (3) compare les données de position du système de radiolocalisation (4) avec les données de position du capteur (7) et forme des données de position vérifiées sur une concordance, l'unité de commande et d'évaluation (3) comparant les données de classification de la station radio (5) avec les données de contour du capteur à résolution spatiale (7) et vérifiant la plausibilité, le capteur à résolution spatiale (7) et les stations radio (5) étant disposés de manière stationnaire.
